# EUROPEAN PATENT APPLICATION

(11) **EP 3 799 519 A1**
(43) Date of publication of application: **31.03.2021**
(21) Application number: 20185120.1
(22) Date of filing: 09.05.2008
(51) Int. Cl.: H04W 76/27

(54) **METHOD AND APPARATUSES FOR SEAMLESS HANDOVER BETWEEN 3GPP AND NON- 3GPP NETWORKS**

(62) Divisional of application: 08753946.6
(71) Applicant: Telefonaktiebolaget LM Ericsson (publ), 164 83 Stockholm (SE)
(72) Inventor: RÖNNEKE, Hans, 434 34 Kungsbacka (SE); RYDNELL, Gunnar, 411 32 Göteborg (SE); SANDER, Ann-Christine, 446 92 Skepplanda (SE); WALKER, John Michael, 2288 The Hague (NL)
(74) Representative: Ericsson

(57) **Abstract**

The present invention relates to a solution for handling seamless handover between a 3GPP network and a non-3GPP network or two non-3GPP networks. The solution uses a new state information informing about a UE being in an Idle state in relation to the network not currently communicating through. Thus the UE is not immediately detached from the old network but may keep a logical connection and quickly re-attach to the old network if of interest.

## Description

### TECHNICAL FIELD

The present invention relates to a solution for providing seamless handover in wireless communication networks, and in particular to a solution for handover between two different types of communication networks,

### BACKGROUND OF THE INVENTION

EPS (Enhanced Packet System) is currently being specified by 3GPP. EPS is a new enhanced packet system (also known as SAE/LTE - Systems Architecture Evolution/ Long Term Evolution),

Evolved packet services are provided to mobile users in the evolved packet core (EPC). The access technologies available for a UE (User Equipment) to get service from the network, voice service operator, specific services (e.g. IMS - IP Multimedia Subsystem) or general internet access are 2G/3G or LTE in the 3GPP technologies, but there are also "non-3GPP" technologies such as WiMAX, CDMA2000, IEEE WLAN (Wireless Local Area Network) etc. When a UE roams it may change access technology depending on the best available connectivity, and when doing so it is desirable that the handover between technologies is seamless, such that the UE will keep its connection to services and in particular its IP address.

Such as the EPS is designed currently in TS 23.401 and TS 23.402, the architecture allows for the UE to get access and stay connected via a UP GW (User Plane Gateway), i.e. the PDN-GW. When the UE attaches to the 3GPP LTE system it connects to a control node, the MME, which assigns the UE to a PDN-GW for User Plane access. The PDN-GW assigns an IP address to the UE. When the UE roams between 3GPP access (LTE) and non-3GPP access (e.g. WiMAX) it shall remain using the same PDN-GW for the entire lifetime of the connection, and thus using the same IP address.

However, such as the system is designed today the UE looses contact with the control node MME, when it roams over from 3GPP (LTE) access to non-3GPP access (e.g. WiMax). The UE is not able to send periodic updates to the MME. When the MME does not receive periodic updates for IDLE UEs it will time out and implicitly detach the UE.

When the UE roams back from non-3GPP access to 3GPP access it needs to attach again, with the consequence that it may be connected to a different PDN-GW and it may receive a new IP address. There is thus no seamless handover between the two communication types.

This same problem also appears in the non-3GPP access network side, such as when a UE is making use of an I-WLAN or a Wimax access network or even a CDMA2000 access. In current non-3GPP access networks the UE is requested to periodically re-authenticate; this procedure is triggered by the AAA server or by the access network. As noted in ref. 5(TS 33.234), periodic re-authentication is also used as a heartbeat to track a user's activity (i.e. similar to the periodic updates sent by the UE to the MME above). If the UE roams from a non-3GPP access network to a 3GPP access network (LTE) then the next AAA or access-network triggered periodic re-authentication will fail. In this case, both the AAA server and the HSS will de-register the user, which is equivalent to detaching the UE in the MME in the 3GPP case explained above. When the UE roams back from a 3GPP access (e.g. LTE) to non-3GPP access (e.g. Wimax, I-WLAN, cdma 2K) it needs to attach again, with the consequence that it may be connected to a different PDN-GW and it may receive a new IP address. There is no seamless handover in this case either. In other words, the same problem as described above for the 3GPP access also occurs in the non-3GPP accesses.

Hence, when a user roams between different network-access technologies, there is no solution to avoid that the control-plane entity in the source access network detaches or de-registers the user once it stops receiving periodic updates or heartbeat signals from the user equipment. This event will lead to seamless handover not being possible (and other error conditions might also appear from the fact that a source network de-registers a UE when it has simply roamed into another access).

### SUMMARY OF THE INVENTION

It is the objective of the present invention to remedy at least some of these problems. This is provided in a number of aspects in which a first is a subscription server handling establishment and maintenance of wireless communication sessions, comprising:
a processing unit;
a memory unit;
at least one communication interface;
wherein the processing unit is arranged to operate instructions stored in the memory unit for tranceiving information control messages, relating to connection status of a UE in relation to at least two different connection types, through the at least one communication interface, control messages for:
   receiving a request for information of IP address from a mobility management device of a first communication type network;
   sending a response to the mobility management device with the IP address;
   sending information about connection status of the UE to a mobility management device in a second communication type network.

The information about connection status may be sent to the mobility management device of the second communication type network comprise an indication of the UE being in an idle mode in the second communication type network.

The at least two different connection types may be chosen with at least one from 3GPP and one from non-3GPP connection types.

The subscription server may further be arranged to receive a query request relating to connection status of the UE from the mobility management device.

A second aspect of the present invention is provided, a mobility management device arranged in an infrastructure of a wireless communication access network of a first type, comprising:
a processing unit;
a memory unit;
at least one communication interface;
wherein the processing unit is arranged to operate instructions stored in the memory unit for tranceiving information control messages relating to connection status of a UE through the at least one communication interface, control messages for:
   sending a request for information of IP address, to a subscription server;
   receiving a response from the subscription server with the IP address;
   updating a database with status information of the UE in the mobility management device .

The processor may further be arranged to operate a periodic update timer. The processor may further be arranged to send a query request relating to connection status of the UE to a subscription server if the periodic update timer has expired.

A third aspect of the present invention, a method for handling handover of a user equipment connection in a wireless communication network between two different wireless connection types is provided, comprising the steps of:
receiving a connection request from a UE in a mobility management device in a first wireless communication network;
sending from the mobility management device a request message for information about IP address to a subscription server;
sending a message indicating the status of the UE to a mobility management device of a second wireless communication network with a wireless communication type different from the first network;
updating a state database with information about the status of the UE in the second mobility management device.

The two wireless connection types may be 3GPP based and non-3GPP based.

The database may be updated with an idle mode status of the UE.

The method may further comprise a step of operating a connection timer. The second mobility management device may be arranged to send a query request relating to connection status of the UE to the subscription server in relation to connection timer status.

A fourth aspect of the present invention, a system is provided for handling handover in a mixed wireless communication network, comprising:
a subscription server;
at least one mobility management device in each communication network together forming the mixed communication network;
an infrastructure network for handling control traffic and mediating data;
wherein the subscription server and mobility management devices are in communication with each other over the infrastructure network and wherein a mobility management device in a second communication type network is arranged to receive information from the subscription server about IP address of a UE transferring to the second communication type network from a first communication type network and wherein the subscription server is arranged to transmit a control message to the mobility management device of the first communication access network indicating that the UE is in idle mode in relation to the first communication network.

The mixed communication network may comprise one of a 3GPP and a non-3GPP network or two non-3GPP networks,

A fifth aspect of the present invention, a communication interface is provided between a mobility management device and a subscription server, wherein information exchange relating to connection status of a UE doing hand over between a 3GPP access network and a non-3GPP access network is transferred on the communication interface.

The present invention thus provides an advantage of providing enhanced seamless service when a UE roams between 3GPP and non-3GPP access or roams between two non-3GPP access networks.

### BRIEF DESCRIPTION OF THE DRAWINGS

In the following the invention will be described in a non-limiting way and in more detail with reference to exemplary embodiments illustrated in the enclosed drawings, in which:
Fig. 1 illustrates schematically a network according to the present invention;
Fig. 2 illustrates schematically a device according to the present invention;
Fig. 3 illustrates schematically a state diagram to one embodiment according of the present invention;
Fig. 4 illustrates schematically a state diagram according to another embodiment according of the present invention; and
Fig. 5 illustrates schematically in a block diagram a method in one embodiment according to the present invention.

### DETAILED DESCRIPTION OF PREFERRED EMBODIMENTS

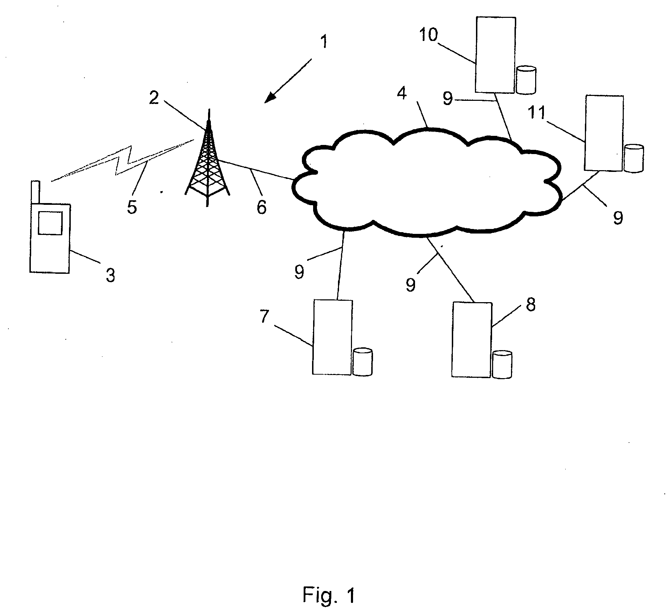

In Fig. 1 reference numeral 1 generally indicate a network according to the present invention. The network comprise a base station (BS) or some other network access gateway (GW) 2 which mobile station (UE) 3 may communicate with using suitable wireless interface 5. The BS/GW is connected in any suitable way 6 to a communication infrastructure network 4 which in turn may be connected to a public network (not shown), e.g. the Internet. In the infrastructure network one or several mobility and/or connection management devices 7, 8 may be attached in order to provide mobility and/or connection management of the UE. These mobility/connection management devices 7, 8 may be connected to the infrastructure network using any suitable connection type 9 or may also be incorporated into the infrastructure network itself. Furthermore, one or several subscription services 10, 11 may be connected 9 to the infrastructure network 4 (connected directly or in-directly to the infrastructure network 4).

A mobility management device 7, 8 may comprise for instance a mobility management entity (MME) or an SGSN.

It should be noted that with the term base station is meant an entity acting as a gateway to an access network with a wireless connection to UE's and other devices in connection with the access network and further connected to a communication network. With the term UE is meant an entity not part of an infrastructure network but that communicate with the infrastructure network (e.g. a mobile phone, a PDA, a laptop, a network connected sensor device, and so on).

The wireless communication between the UE and BS may be any suitable type using packet based communication, e.g. WLAN, WiMax, WiFi, CDMA2000, GPRS, 2G/3G, and so on as understood by the skilled person. The BS may provide several different types of communication interfaces, for instance both GPRS and WLAN at the same time and the UE may choose between these two types depending on different parameters (bandwidth, Link quality, range, QoS, monetary, operator, and so on). Alternatively, the UE may perform a handover between different communication types located on different BS and/or due to moving from one BS cell to another.

Depending on type of connection between the BS and the UE initially different mobility management and/or connection management devices may be in operation. In case the UE has a relation to a network operator, a home subscriber system (HSS) keeps track of the UE.

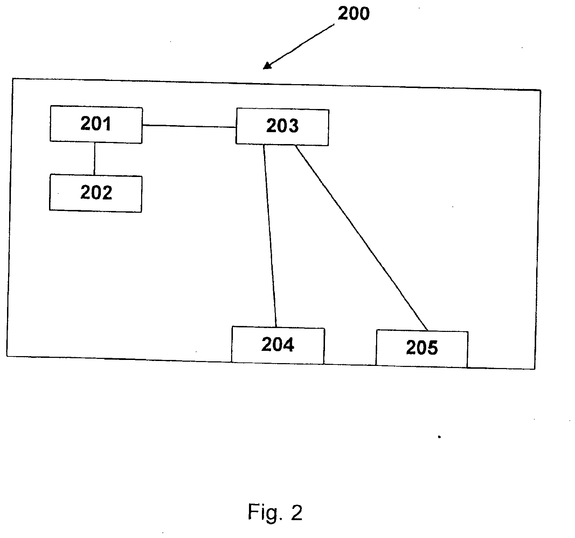

The present invention may be implemented in an infrastructure device 200 as shown in Fig. 2. The infrastructure device 200 may comprise a processing unit 201, at least one memory unit 202, and at least one communication control unit 203 handling communication using at least one communication interface 204, 205. The device 200 is arranged to communicate with the infrastructure network 4 and entities connected to the network 4 as well as entities connected to a public network in turn connected to the infrastructure network 4. It should be understood by the skilled person that other units may be present in the device depending on configuration and tasks performed by the device: however, these are not shown since they are of no importance for the present invention.

When a UE attaches to a 3GPP network a Mobility Management entity (MME) or SGSN will be involved to keep track of the UE. Other entities or devices may be in operation during the attachment and connection of the UE to the infrastructure network; however, these are not shown or discussed as these are out of the scope of the present invention.

Below examples of embodiments of the present invention will be discussed and for this it is assumed that the UE has attached to a 3GPP or non-3GPP network and has established a connection using known procedures.

According to the current architecture and specification in TS 23.401 and 23.402, the UE will autonomously make a handover from 3GPP access to non-3GPP access. The UE will attach in the non-3GPP side. At that point it will get in contact with the network and in particular there will be a signaling to an AAA server in order to obtain the PDN-GW address where the UE is already connected in the user plane (UP). The AAA server has knowledge of or can get the PDN-GW address from the HSS. It is advantageously for seamless handover as seen above that the PDN-GW does not change.

The AAA server will become aware that the UE is connected via non-3GPP access and can indicate to the HSS that the UE is now connected to non-3GPP access.
At this point, the MME or SGSN is not aware that the UE has left from 3GPP access to non-3GPP access. The MME or SGSN needs also to be aware of this. Since the information is available in the AAA server and/or in the HSS, the MME may be informed about the non-3GPP attachment of the UE. The MM state in the MME and/or SGSN is then modified such that instead of staying in IDLE state, the UE is classified as in state IDLE_non_3GPP _access, such that special handling of the UE may be done in this state and so that the UE is prevented from being detached.

The same solution is applied in the case a UE roams from a non-3GPP access (e.g. WiMax, I-WLAN) to a 3GPP access (e.g. LTE or 2G/3G). In this case, when the UE changes to a 3GPP access, the MME and/or the SGSN are contacted and become aware that the UE is attached and can obtain the PDN-GW address from the HSS. However, the AAA server is not aware that the UE has left from non-3GPP access to 3GPP access. The AAA server needs also to be aware of this. Since the information is available in the MME/SGSN server and/or in the HSS, the AAA server may be informed about the 3GPP attachment of the UE. The registration status in AAA server is then modified such that instead of going into state of user De-registered, the UE is classified as in state IDLE_3GPP access, such that special handling of the UE is done in this state and so that the UE is prevented from being detached.

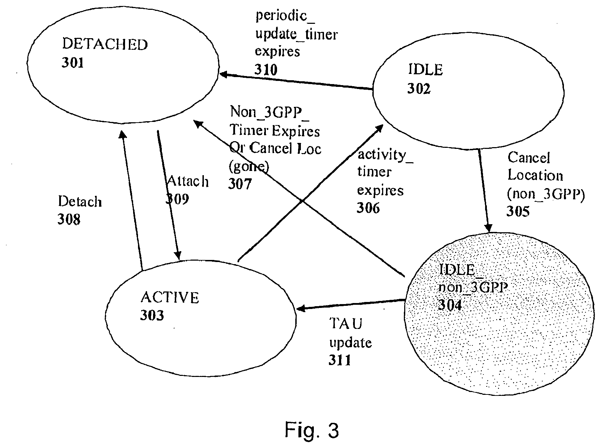

There is according to the present invention a new MM state the IDLE_non_3GPP as shown in Fig. 3. Fig. 3 shows different states of the UE in a 3GPP infrastructure. There are four different states for the UE: 301 Detached from the network, 302 IDLE in the network, 303 Active in the network, and 304 IDLE_non_3GPP. Changing state to/from Active/Detached may be performed using attach/detach control procedures, 309/308, changing from Active to IDLE state may be performed if an activity timer expires 306. In the same manner changing state from IDLE to Detached may be performed if an activity timer expires 310 (periodic update timer). Change from an IDLE state to the IDLE_non_3GPP state may be triggered from a Cancel location (non_3GPP) procedure 305. From the IDLE_non_3GPP state the UE may go to a Detached state if a timer expires (Non_3GPP_timer) or a command indicating that the UE has left permanently (for instance a Cancel Location (gone) control procedure) 307. From the IDLE_non_3gpp state the UE may change to an Active state using for instance a TAU update 311. These state changes will now be discussed in more detail.

The new state IDLE_non_3GPP can be exited through Non_3GPP_Timer Expires or a Cancel Location (gone) in which case the UE is detached. Or the UE returns to 3GPP access and sends a message to the MME, e.g. a TAU Update, in which case the UE enters Active in 3GPP MME.

In the state IDLE_non_3GPP special handling of the UE is taken, such that e.g. when the ordinary periodic update timer expires the MME can take actions for alternative handling of the UE, e.g.:
1. the periodic_update_timer can be restarted (a limited number of times)
2. the length of the periodic_update_timer can be pro-longued
3. the MME can request from the HSS/AAA information if the UE is still known to be in non-3GPP access

In the state IDLE_non_3GPP the MME can have another timer (non_3GPP_Timer) that may expire, typically a longer time. Or the MME may get a Cancel Location (gone) from the HSS or AAA server that the UE has detached from non-3GPP access.

The UE can enter new state IDLE_non_3GPP in the MME when the MME gets updated that the UE is entering non-3GPP access. There can be different methods to get the MME updated of that the UE is entering non-3GPP access, e.g.:
1. when the AAA gets to know that the UE has attached to non-3GPP it may update the UE state in the HSS indicating non-3GPP access. The HSS may send a message, e.g. Cancel Location with a new cause code "UE in non-3GPP access" to the MME. (Existing interfaces in the TS 23.401 and TS 23.402, Wx* and S6a may be used. A new SAE message for Cancel Location and/or a new cause code may be designed)
2. when the AAA gets to know that the UE has attached to non-3GPP it may update the UE state in the MME. The AAA may get the MME address from the HSS. (Existing interfaces in the TS 23.401 and TS 23.402, Wx* is used. In addition a new interface between MME and AAA server is needed.)
3. when the periodic_update_timer expires in the MME , the MME can poll the HSS for information about the access state of the UE. If the HSS is updated by the AAA server, the HSS will respond to the MME that the UE is in non-3GPP access. (Existing interfaces in the TS 23.401 and TS 23.402, Wx* and S6a are used. A new SAE message for Polling the HSS from the MME is designed.)
4. when the periodic_update_timer expires in the MME , the MME can poll the AAA server for information about the access state of the UE. (A new interface between MME and AAA server is needed which is not there in the SAE architecture today)

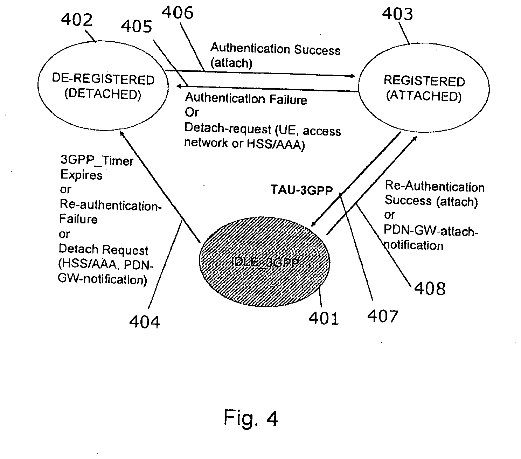

For the non-3GPP access, the AAA server is updated to handle the following registration states as seen in Fig. 4: UE Registration states in AAA and HSS. There are mainly three states (of concern for the present invention): Registered (attached) 403, De-registered (detached) 402, and IDLE-3GPP 401. The different routes to changing state are: 404 from IDLE_3GPP to De-registered through at least one of 3GPP_timer expired, Re_authentication failure, or Detach request (HSS/AAA, PDN-GW notification). The UE may change state from Registered to IDLE_3GPP through a TAU_3GPP control procedure 407 and from IDLE_3GPP to Registered through at least one of Re-authentication success (attach) or PDN_GW attach notification 408. In the same manner the state may be switched from De-registered to Registered through an Authentication success control procedure 406 and switched from Registered to De-registered through at least one of Authentication failure or Detach request (UE, access network or HSS/AAA) control procedures 405. These will now be discussed in more detail.

A new non-3GPP UE registration state is added for a user in the AAA server (and also in the HSS since the HSS has the same information): IDLE_3GPP.

The UE enters the new state IDLE_3GPP in the AAA when the AAA gets updated that the UE is entering 3GPP access, basically when the UE performs a Tracking Area Update (TAU) procedure (against an MME) or a Routing Area Update procedure (against an SGSN).

Both scenarios are included in the stimulus TAU-3GPP which causes the UE's state in the AAA to change from Attached/Registered to IDLE_3GPP. There may be different methods to get the AAA updated with the information that the UE has successfully changed to a 3GPP access, e.g.:
1. The HSS notifies the AAA server that the UE has performed a successful hand-over to 3GPP access without having detached from non-3GPP.
2. The MME directly notifies the AAA server that the UE has performed a successful hand-over to 3GPP access without having detached from non-3GPP.
3. The PDN-GW notifies the AAA server that the UE has performed a successful hand-over to 3GPP access without having detached from non-3GPP.

In all cases, as a result, the AAA server should not detach the UE, not try to re-authenticate the UE and finally set the UE's state to IDLE_3GPP. The AAA server may also need to modify its re-authentication timers as well as those previously set in the non-3GPP access network in order to avoid unsuccessful re-authentications.

The UE registration state in the AAA server may change from IDLE_3GPP to:
1. De-registered/detached. This may occur because the 3GPP_Timer expires, or the re-authentication was unsuccessful in the non-3GPP access, or because the HSS requests the AAA to detach the UE, or because the PDN-GW notifies the AAA that the UE has detached in 3GPP access and there is no UE activity in the non-3GPP access.
2. Registered/Attached. This occurs when the UE successfully authenticates or re-authenticates in a non-3GPP access or when the PDN-GW notifies the AAA that the UE has initiated activity in the non-3GPP access.

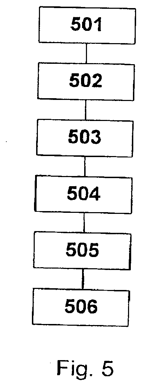

A method according to the present invention may be illustrated as in Fig. 5, wherein:

| | |
|---|---|
| 501. | A UE moves from one connection type network (3GPP or non-3GPP) to another through an attachment/activation procedure; |
| 502. | The UE signals to a mobility entity to receive a PDN-GW address; |
| 503. | The mobility entity checks the status of the UE at a home subscription server (HSS) and receives the PDN-GW address; |
| 504. | Updating the state information of the UE in the mobility entity; |
| 505. | The mobility entity or the HSS transmits a message with information of the current state of the UE to the mobility entity of the old connection type network. |
| 506. | The mobility entity of the old network updates state information of the UE internally. |

It should be noted that even though the present invention has been exemplified using a transfer from 3GPP to a non-3GPP access, it is also applicable to other variations of transfer from one network to another, e.g. from one non-3GPP to another non-3GPP network or from a non-3GPP network to a 3GPP network. Therefore the term connection type network may also comprise different logical types as well as different communication standards, e.g. transfer between WLAN of different operators, 3GPP to non-3GPP network transfer, transfer between WiFi and WiMAX networks of same or different operators.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, and that several "means", "devices", and "units" may be represented by the same item of hardware.

The above mentioned and described embodiments are only given as examples and should not be limiting to the present invention. Other solutions, uses, objectives, and functions within the scope of the invention as claimed in the below described patent claims should be apparent for the person skilled in the art.

### References

1. 3GPP TS 23.401
2. 3GPP TS 23.402
3. 3GPP TS 23.060
4. 3GPP TS 23,234
5. 3GPP TS 33.234

### ABBREVIATIONS

- AAA: Access, Authorization, and Accounting
- BS: Base station
- EPC: Evolved Packet Core
- EPS: Enhanced Packet System
- GGSN: Gateway GPRS Support Node
- GW: Gateway
- HO: Hand-over or Handoff
- HSS: Home Subscriber Server
- IP: Internet Protocol
- I-WLAN: Interworking WLAN
- LTE: Long Term Evolution
- MM: Mobility management
- MME: Mobility Management Entity
- PDN-GW: Packet Data Network-Gateway
- RNC: Radio Network Controller
- SAE: System Architecture Evolution
- SGSN: Serving GPRS Support Node
- TAU: Tracking-Area Update
- UE: User Equipment
- UP: User Plane
- WLAN: Wireless Local Area Network

## Claims

1. A method performed by a subscription server (10, 11) handling establishment and maintenance of wireless communication sessions, the subscription server comprising:
- a processing unit (201);
- a memory unit (202);
- at least one communication interface (203, 204, 205);
the method comprising:
- tranceiving, by the processing unit (201) information control messages, relating to connection status of a user equipment, UE, (3) in relation to at least two different connection types, through the at least one communication interface (4), the control messages for:
- receiving a request for information of an IP address from a mobility management device of a first communication type network;
- sending a response to the mobility management device with the IP address;
- sending information about connection status of the UE (3) to a mobility management device in a second communication type network,
wherein IP address is the PDN-GW address where the UE (3) is already connected.

2. The method according to claim 1, wherein the information about connection status sent to the mobility management device of the second communication type network comprise an indication of the UE (3) being in an idle mode in the second communication type network.

3. The method according to claim 1, wherein the at least two different connection types are chosen with at least one from 3GPP and one from non-3GPP connection types.

4. The method according to claim 1, further arranged to receive a query request relating to connection status of the UE (3) from the mobility management device.

5. A method performed by a mobility management device arranged in an infrastructure of a wireless communication access network of a first type, wherein the mobility management device comprises:
- a processing unit (201);
- a memory unit (202);
- at least one communication interface (203, 204, 205);
the method comprising:
- tranceiving, by the processing unit (201), information control messages relating to connection status of a user equipment, UE, (3) through the at least one communication interface (203, 204, 205), the control messages for:
- sending a request for information of an IP address, to a subscription server (10, 11);
- receiving a response from the subscription server with the IP address;
- updating a database with status information of the UE (3) in the mobility management device,
wherein the IP address is the PDN-GW address where the UE (3) is already connected.

6. The method according to claim 5, wherein the processing unit (201) is further arranged to operate a periodic update timer.

7. The method according to claim 5, wherein the processing unit (201) is further arranged to send a query request relating to connection status of the UE (3) to a subscription server (10,11) if the periodic update timer has expired.

8. A method for handling handover of a user equipment connection in a wireless communication network between two different wireless connection types, comprising the steps of:
- receiving a connection request from a user equipment, UE, (3) in a mobility management device in a first wireless communication network;
- sending from the mobility management device a request message for information about IP address to a subscription server (10, 11);
- sending a message indicating the status of the UE (3) to a mobility management device of a second wireless communication network with a wireless communication type different from the first network;
- updating a state database with information about the status of the UE (3) in the second mobility management device,
wherein the IP address is the PDN-GW address where the UE (3) is already connected.

9. The method according to claim 8, wherein the two wireless connection types are 3GPP based and non-3GPP based.

10. The method according to claim 8, wherein database is updated with an idle mode status of the UE (3).

11. The method according to claim 10, further comprising a step of operating a connection timer.

12. The method according to claim 11, wherein the second mobility management device is arranged to send a query request relating to connection status of the UE (3) to the subscription server in relation to connection timer status.

13. A system for handling handover in a mixed wireless communication network, comprising:
- a subscription server (10, 11);
- at least one mobility management device (7, 8) in each communication network together forming the mixed communication network;
- an infrastructure network (4) for handling control traffic and mediating data;
wherein the subscription server and mobility management devices are in communication with each other over the infrastructure network and wherein a mobility management device in a second communication type network is arranged to receive information from the subscription server about IP address of a UE (3) transferring to the second communication type network from a first communication type network and wherein the subscription server is arranged to transmit a control message to the mobility management device of the first communication access network indicating that the UE is in idle mode in relation to the first communication network.

14. The system according to claim 13, wherein the mixed communication network comprises one of a 3GPP and a non-3GPP network or two non-3GPP networks.

15. A communication interface between a mobility management device (7, 8) and a subscription server (10, 11), wherein information exchange relating to connection status of a UE (3) doing hand over between a 3GPP access network and a non-3GPP access network is transferred on the communication interface.
